# EUROPÄISCHE PATENTSCHRIFT

(11) **EP 0 945 213 B1**
(45) Veröffentlichungstag und Bekanntmachung des Hinweises auf die Patenterteilung: **20.08.2003**
(21) Anmeldenummer: 99104038.7
(22) Anmeldetag: 16.03.1999
(51) Int. Cl.: B23Q 11/00, B08B 1/04

(54) **Reinigungsvorrichtung für die Kegelschäfte von Werkzeugaufnahmen**
Cleaning apparatus for conical shanks of tool holders
Dispositif de nettoyage pour des queues coniques de portes-outils

(30) Priorität: 24.03.1998 DE 29805321 U
(43) Veröffentlichungstag der Anmeldung: 29.09.1999
(73) Patentinhaber: DECKEL MAHO GmbH, D-87459 Pfronten (DE)
(72) Erfinder: Seitz, Reinhold, 87659 Hopferau (DE)
(74) Vertreter: Beetz & Partner Patentanwälte

(56) Entgegenhaltungen:
- EP-A- 0 420 039
- EP-A- 0 458 014
- DE-A- 4 228 268
- DE-U- 29 515 273
- PATENT ABSTRACTS OF JAPAN vol. 013, no. 415 (M-870), 13. September 1989 (1989-09-13) -& JP 01 153248 A (A T SHII KK), 15. Juni 1989 (1989-06-15)
- PATENT ABSTRACTS OF JAPAN vol. 016, no. 359 (M-1289), 4. August 1992 (1992-08-04) & JP 04 111745 A (EI TEI SHII KK), 13. April 1992 (1992-04-13)

## Beschreibung

Die Erfindung betrifft eine Vorrichtung zum Reinigen der Kegelschäfte von Werkzeugaufnahmen, insbesondere von Kegelhohlschäften mit Plananlage, nach dem Oberbegriff des Anspruches 1, wie sie aus der Offenlegungsschrift DE 4228268 A1 bekannt ist.

Bei modernen programmgesteuerten Werkzeugmaschinen werden die Werkzeuge mit Hilfe von Werkzeugwechslern in automatisierten Abläufen aus einem Werkzeugmagazin in die Arbeitsköpfe der Werkzeugmaschine - und umgekehrt - gewechselt, wobei diese Wechselvorgänge innerhalb kurzer Zeitspannen ablaufen. Dabei ist es von wesentlicher Bedeutung, daß die in den Arbeitsköpfen vorhandenen Spannvorrichtungen die Kegelschäfte der Werkzeuge bzw. der Werkzeugaufnahmen sicher und mit hoher Genauigkeit in den entsprechenden konischen Ausnehmungen im Arbeitskopf fixieren. Die Durchführung der nachfolgenden Bearbeitungsvorgänge am Werkstück setzt insbesondere bei drehangetriebenen Arbeitsspindeln voraus, daß ein hochfester Verbund zwischen dem Kegelschaft und der zugehörigen Arbeitsspindel hergestellt ist, der durch die großflächige Anlage der Mantelfläche des Kegelschaftes an der inneren Umfangsfläche der konischen Kegelaufnahme in Verbindung mit den von der Spannzange auf den Kegelschaft ausgeübten Anzugskraft erreicht wird. Bei herkömmlichen Kegelschäften mit relativ großem Konuswinkel (Steilkegelschäften, ISO, etc.) wurde der genaue und feste Sitz des Kegelschaftes in der Konusaufnahme durch an den Schaftflächen anhaftende Verunreinigen, wie Partikel, Späne, Schmieren o.dgl., nur unwesentlich beeinflußt, so daß eine Reinigung der Schaftflächen in bestimmten Zyklen nicht notwendig war bzw. in der Werkzeugzurichtung vor oder beim Bestücken der Magazine mit den Werkzeugen durchgeführt werden konnte. Bei den in neuerer Zeit entwickelten Werkzeugaufnahmen mit Kegelhohlschäften und Plananlage können jedoch Probleme beim Einspannen dieser Kegelhohlschäfte in die Konusausnehmungen der Arbeitsspindel auftreten, die durch Ablagerungen von z.B. Spänen oder Partikeln auf den Wirkflächen der Schäfte verursacht werden. In diesen Fällen kann die ausreichend starre und hochgenaue Einspannung des Hohlkegelschaftes in die Konusaufnahme der Arbeitsspindel beeinträchtigt werden. Aus diesem Grunde sind bereits Reinigungsvorrichtungen vorgeschlagen worden, mit denen unter Verwendung von speziellen Reinigungswerkzeugen, insbesondere von Bürsten, die nur leicht konische Mantelfläche des Kegelschaftes sowie die plane Anlagefläche von Ablagerungen und Verschmutzungen gereinigt werden können. Diese Vorrichtungen sind jedoch technisch kompliziert und können in ein automatisches Werkzeug-Wechsel-System nicht integriert werden.

Aufgabe der Erfindung ist es, eine Vorrichtung zum Reinigen der Kegelschäfte von Werkzeugaufnahmen, insbesondere von Kegelhohlschäften mit Plananlage, nach dem Oberbegriff des Anspruches 1, zu schaffen, die einen hohen Reinigungseffekt auch gegenüber festeren Anbackungen hat und auf technisch einfache Weise in ein Werkzeug-Wechsel-System integriert werden kann.

Zur Lösung dieser Aufgabe weist die erfindungsgemäße Reinigungsvorrichtung ein mit einem Druckfluid beaufschlagbares Kanalsystem im Gehäuse auf, das auf die zu reinigenden Flächen des Kegelschaftes gerichtete Spülkanäle enthält, wobei das Druckfluid das Antriebsmedium für das Reinigungswerkzeug bildet.

Gemäß der Erfindung werden mehrere Reinigungseffekte ausgenutzt, und zwar einmal ein Spüleffekt durch das gezielte Beaufschlagen der zu reinigenden Flächen des Kegelschaftes mit einem flüssigen und/oder gasförmigen Druckfluid, durch das die nur lose an den Kegelschaftflächen angelagerten Partikel und Verschmutzungen abgeschwemmt werden. Gleichzeitig werden durch die Abstreifelemente des drehangetriebenen Reinigungswerkzeuges die an den Kegelschaftflächen fester anhaftenden Verunreinigungen abgelöst, so daß sie dann ebenfalls durch den Druckfluidstrom mit weggeschwemmt werden können.

Ein besonderer Vorzug der erfindungsgemäßen Vorrichtung besteht in der technisch einfachen und auch schnellen Durchführung der Reinigung eines Kegelschaftes, indem das Gehäuse mit seiner zentralen Ausnehmung an den Kegelschaft axial herangefahren und quasi über diesen gestülpt wird, woraufhin dann durch einfaches Öffnen von Ventilen in den Druckmittel-Zuleitungen der Reinigungsvorgang automatisch abläuft.

Zweckmäßig umfaßt das Reinigungswerkzeug ein im Gehäuse frei drehbar gelagertes Flügelrad, das von den über das Kanalsystem zugeführten Druckmittelstrahlen angetrieben wird. Dabei sollte vorzugsweise die Nabe des Reinigungswerkzeugs eine zentrale Ausnehmung aufweisen, deren Form der Kontur des Kegelschaftes und auch seiner Planfläche angepaßt ist. Dieses Reinigungswerkzeug sollte auf einfache Weise aus dem Gehäuse ausgebaut werden können, um durch entsprechende Auswahl Kegelschäfte unterschiedlicher Abmessungen in der gleichen Vorrichtung reinigen zu können. Die Abstreifelemente sollten zweckmäßigerweise an der inneren Umfangsfläche der Nabe sowie an einer der Planfläche gegenüberliegenden Stirnseite am Reinigungswerkzeug vorgesehen sein, wobei durchgehende oder unterbrochene Abstreifleisten in winkelversetzter Anordnung oder auch Bürstenreihen als Abstreifelemente gewählt werden können. Bezüglich der Antriebskinematik und auch der Reinigungswirkung bietet sich als Material für ein als Flügelrad ausgebildetes Reinigungswerkzeug ein geeigneter Kunststoff ggf. mit einer PTFE-Beschichtung oder -Einlagerungen an.

Von besonderem Vorteil werden Druckfluide in der erfindungsgemäßen Reinigungsvorrichtung verwendet, die in der jeweiligen Werkzeugmaschine bereits vorhanden sind. So kann einmal die für die Werkstückbearbeitung erforderliche Spülflüssigkeit mit Betriebsdrücken von bis zu 40 b eingesetzt werden. Weiterhin kann Druckluft allein oder abwechselnd mit der Spülflüssigkeit sowie auch als Emulsion mit der Spülflüssigkeit Verwendung finden, die in modernen Maschinensystemen ebenfalls vorhanden ist. Diese Druckfluide können über geeignete Sperr- oder Dosierventile und Leitungen in das Kanalsystem des Gehäuses eingeführt sowie über Rücklaufleitungen in zumindest das Flüssigkeitssystem der Maschine zurückgeführt werden.

Im folgenden wird ein Ausführungsbeispiel der Erfindung anhand der Zeichnung im einzelnen beschrieben. Es zeigen:
- Fig. 1: die Reinigungsvorrichtung im schematischen Axialschnitt;
- Fig. 2: ein als Flügelrad ausgebildetes Reinigungswerkzeug der Vorrichtung nach Fig. 1 in Draufsicht.

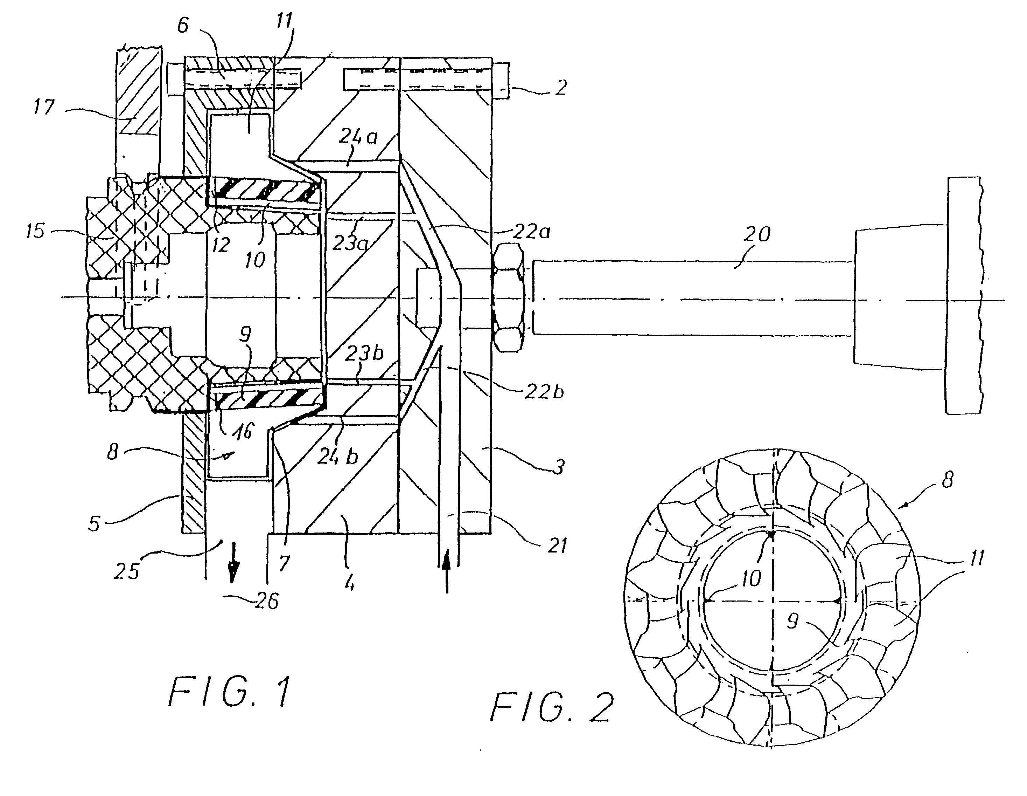

Die in Fig. 1 dargestellte Reinigungsvorrichtung enthält ein zylindrisches Gehäuse, bestehend aus den über Schraubbolzen 2 miteinander verbundenen Gehäuseteilen 3 und 4. An der Stirnseite des Gehäuseteils 4 ist ein napfförmiger Deckel 5 über Schraubbolzen 6 lösbar befestigt. In einer zentralen Ausnehmung 7 im Gehäuseteil 4 ist ein Reinigungswerkzeug 8 frei drehbar und schwimmend gelagert, das beim vorliegenden Ausführungsbeispiel in Form des in Fig. 2 gezeigten Flügelrades ausgebildet ist. Dieses Flügelrad 8 besteht zweckmäßig aus einem geeigneten Kunststoff und weist eine durchgehende Nabe 9 von leicht konischer Form auf, an der nach radial innen weisende Abstreiflippen 10 sowie nach radial außen weisende Flügel 11 angeformt sind. An der in Fig. 1 linken Stirnseite der Nabe 9 sind ferner radialgerichtete Abstreifleisten 12 ausgebildet.

In dem von dem Flügelrad 8 umgebenen Innenraum ist ein Hohlkegelschaft 15 mit einer radialen Planfläche 16 eingesetzt, der mittels eines Zangengreifers 17 in der in Fig. 1 dargestellten Position gehalten ist.

An dem rückwärtigen Gehäuseteil 3 ist eine bewegliche Haltekonstruktion 20 befestigt, mit der das Gehäuse in die in Fig. 1 dargestellte Position gebracht werden kann. Im Gehäuseteil 3 ist ein Druckfluidkanal 21 vorgesehen, der über - nicht dargestellte - Ventile an das Spülflüssigkeitssystem und/oder an das Druckluftsystem der Werkzeugmaschine angeschlossen werden kann. Dieser Druckfluidkanal 21 verzweigt sich in dem Gehäuseteil 3 in mehrere Zweigkanäle 22a, 22b, von denen wiederum Spülkanäle 23a, 23b abzweigen. Diese Spülkanäle 23a, 23b verlaufen im wesentlichen in dem Gehäuseteil 4 und münden etwa in dem Bereich der Abstreifleisten 10 am Ende der Mantelfläche des Hohlkegelschaftes 15 aus. Die zwei Kanäle 22a, 22b führen weiter zu Kanälen 24a, 24b im Gehäuseteil 4, die im Bereich der Flügel 11 des Reinigungswerkzeuges 8 ausmünden, so daß die aus ihnen achsparallel oder auch tangential austretenden Flüssigkeitsstrahlen auf die schrägen bzw. bogenförmig ausgebildeten Flügel 11 auftreffen und dadurch das Flügelrad 8 in Drehung versetzen.

Die dargestellte und vorstehend beschriebene Reinigungsvorrichtung wird wie folgt betrieben.

Die mit einem nicht dargestellten Bearbeitungswerkzeug versehene Werkzeugaufnahme ist in den Zangen bzw. Greifern 17 z.B. eines Werkzeugmagazins festgelegt. Die Reinigungsvorrichtung wird mittels ihrer Tragkonstruktion 20 so an die Werkzeugaufnahme 15 herangefahren, daß der Hohlkegelschaft in die vom Reinigungswerkzeug 8 gebildete schwach konische Ausnehmung gelangt. Kurz bevor die in Fig. 1 dargestellte Position erreicht ist, wird ein erstes Druckfluid, beispielsweise Druckluft, über den Kanal 21 in das Kanalsystem 22 bis 24 des Gehäuses eingeführt, so daß die in den Kanälen 23a, 23b erzeugten Ströme die an der Mantelfläche des Kegelschaftes sitzenden Partikel abblasen. Gleichzeitig wird das Flügelrad durch die Druckluftströme in den Kanälen 24a und 24b in Drehung versetzt. In diesem Zustand sind die Spalträume zwischen dem Reinigungswerkzeug 8 und dem Hohlkegelschaft 15 noch ausreichend groß, so daß auch größere Späne gelöst und mit dem Druckmittelstrom zur Abströmöffnung 25 hin transportiert werden können. Durch eine weitere Axialbewegung der Reinigungsvorrichtung wird die in Fig. 1 dargestellte Position erreicht, in welcher die Abstreifleisten 10 an der Mantelfläche des Hohlkegelschaftes und die radialen Abstreifleisten 12 an der Planfläche 16 des Hohlkegelschaftes mehr oder weniger dicht anliegen. Da der Druckfluidstrom nicht nur aus den Spülkanälen 23a, 23b, sondern auch aus den Kanälen 24a, 24b in Form von Strahlen austritt, wird das als Flügelrad ausgebildete Reinigungswerkzeug 8 drehangetrieben, wobei seine Abstreifleisten 10, 12 die an den entsprechenden Flächen des Hohlkegelschaftes anhaftenden Partikel durch den mechanischen Abstreifeffekt lösen, so daß diese dann durch die Wirkung der Spülstrahlen über die Auslaßöffnung 25 und einen Rücklaufstutzen 26 ausgetragen werden können.

Um die Intensität der Reinigung zu vergrößern, kann als Druckfluid wahlweise Druckluft oder auch die unter relativ hohem Druck stehende Spülflüssigkeit des Maschinensystems Verwendung finden. Diese Druckfluide werden über geeignete separate Leitungen und Ventile in die Druckleitung 21 der Halterung 20 eingeführt. Die Druckfluide können auch über anders positionierte Anschlußstutzen in das Kanalsystem 23, 24 eingespeist werden.

Durch die geeignete Führung der Spül- und Antriebskanäle 23, 24 wird erreicht, daß auf das Reinigungswerkzeug eine in Fig. 1 nach links gerichtete Kraft ausgeübt wird, welche die radialen Abstreifleisten 12 gegen die Planfläche 16 andrückt, so daß gerade dieser kritische Bereich der Schaftfläche intensiv gereinigt wird.

Die Erfindung ist nicht auf die vorstehend beschriebene Ausführung beschränkt. So können beispielsweise statt der dargestellten Abstreifleisten auch andere Abstreifelemente, wie z.B. Bürsten eingesetzt werden. Ferner kann das Reinigungswerkzeug auch entweder in dem Gehäuseteil 4 oder im Deckel 5 mit Hilfe von Wälz- oder Gleitlagern gelagert werden. Je nach der Form der Leitschaufeln können die Kanäle 24a, 24b axial oder auch tangential auf das Flügelrad 8 gerichtet sein.

## Patentansprüche

1. Vorrichtung zum Reinigen der Kegelschäfte von Werkzeugaufnahmen (15), insbesondere von Kegelhohlschäften mit Plananlage, mit einem Gehäuse mit einer zentralen Ausnehmung (7), und einem in der Gehäuseausnehmung (7) drehangetriebenes Reinigungswerkzeug (8), das Abstreifelemente (10, 12) aufweist, **gekennzeichnet durch**
ein mit einem Druckfluid beaufschlagtes Kanalsystem (22 bis 24) im Gehäuse, das auf die zu reinigenden Flächen (16) des Kegelschaftes (15) gerichtete Spülkanäle (23a, 23b) enthält, wobei das Reinigungswerkzeug **durch** das über dieses Kanalsystem zugeführte Druckfluid drehangetrieben ist.

2. Vorrichtung nach Anspruch 1,
**dadurch gekennzeichnet, daß**
das Reinigungswerkzeug ein im Gehäuse drehbar gelagertes Flügelrad (8) enthält, das von Druckmittelstrahlen angetrieben ist.

3. Vorrichtung nach Anspruch 2,
**dadurch gekennzeichnet, daß**
das Flügelrad (8) im Gehäuse schwimmend gelagert ist.

4. Vorrichtung nach einem der Ansprüche 1 bis 3,
**dadurch gekennzeichnet, daß**
das Reinigungswerkzeug (8) eine Nabe (9) mit einer zentralen Ausnehmung enthält, deren Form der Kontur des Kegelschaftes (15) incl. seiner Planfläche (16) angepaßt ist.

5. Vorrichtung nach einem der Ansprüche 1 bis 4,
**dadurch gekennzeichnet, daß**
mehrere auf die zu reinigenden Flächen des Kegel- , schafts einwirkende Abstreifelemente (10, 12) in winkelversetzter Anordnung am Reinigungswerkzeug (8) vorgesehen sind.

6. Vorrichtung nach Anspruch 5,
**dadurch gekennzeichnet, daß**
die Abstreifelemente (10, 12) leisten- oder bürstenartig ausgebildet sind.

7. Vorrichtung nach einem der Ansprüche 1 bis 6,
**dadurch gekennzeichnet, daß**
das Reinigungswerkzeug (8) aus Kunststoff besteht.

8. Vorrichtung nach einem der Ansprüche 1 bis 7,
**dadurch gekennzeichnet, daß**
das Reinigungswerkzeug (8) auswechselbar im Gehäuse angeordnet ist.

9. Vorrichtung nach einem der Ansprüche 1 bis 8,
**dadurch gekennzeichnet, daß**
das Druckfluid die maschineneigene Spülflüssigkeit ist.

10. Vorrichtung nach einem der Ansprüche 1 bis 9,
**dadurch gekennzeichnet, daß**
das Druckfluid maschineneigene Druckluft ist.

11. Vorrichtung nach einem der vorhergehenden Ansprüche,
**dadurch gekennzeichnet, daß**
das Druckfluid eine Emulsion aus Spülflüssigkeit und Druckluft ist.

12. Vorrichtung nach einem der vorhergehenden Ansprüche,
**dadurch gekennzeichnet, daß**
das Gehäuse an einer beweglichen Tragkonstruktion (20) montiert ist.

## Claims

1. A device for cleaning the conical shanks of tool holders (15), particularly hollow conical shanks with planar abutment, with a housing with a central aperture (7) and a cleaning tool (8) which comprises stripper elements (10, 12) and which is rotatably driven in the housing recess (7), **characterised by** a duct system (22 to 24) in the housing, said duct system being subjected to a pressure fluid and containing flushing ducts (23a, 23b) which are directed towards those surfaces (16) of the conical shank (15) which are required to be cleaned, the cleaning tool being rotatably driven by the pressure fluid fed via said duct system.

2. A device according to claim 1, **characterised in that** the cleaning tool contains an impeller (8) mounted rotatably in the housing and driven by pressure medium jets.

3. A device according to claim 2, **characterised in that** the impeller (8) is mounted floatingly in the housing.

4. A device according to any one of claims 1 to 3, **characterised in that** the cleaning tool (8) contains a hub (9) with a central recess, the shape of which is adapted to the shape of the contour of the conical shank (15) including its planar surface (16).

5. A device according to any one of claims 1 to 4, **characterised in that** a plurality of stripper elements (10, 12) acting on the surfaces of the conical shank for cleaning are provided on the cleaning tool (8) in an angular offset arrangement.

6. A device according to claim 5, **characterised in that** the stripper elements (10, 12) are constructed in the form of strips or brushes.

7. A device according to any one of claims 1 to 6, **characterised in that** the cleaning tool (8) consists of plastic.

8. A device according to any one of claims 1 to 7, **characterised in that** the cleaning tool (8) is disposed interchangeably in the housing.

9. A device according to any one of claims 1 to 8, **characterised in that** the pressure fluid is the machine's own flushing liquid.

10. A device according to any one of claims 1 to 9, **characterised in that** the pressure fluid is the machine's own compressed air.

11. A device according to any one of the preceding claims, **characterised in that** the pressure fluid is an emulsion of flushing liquid and compressed air.

12. A device according to any one of the preceding claims, **characterised in that** the housing is mounted on a movable supporting structure (20).

## Revendications

1. Dispositif de nettoyage pour des queues coniques de porte-outils (15), en particulier des queues coniques creuses ayant une disposition plane, doté d'un logement ayant un évidement central (7) et d'un outil de nettoyage (8) entraîné par rotation dans l'évidement du logement (7), qui présente des éléments abrasifs (10, 12), **caractérisé par**
un système de canaux (22 à 24), alimenté par un fluide sous pression, situé dans le logement comprenant des canaux de rinçage (23a, 23b) de la queue conique (15) orientés sur les surfaces (16) à nettoyer, l'outil de nettoyage étant entraîné en rotation au moyen du fluide sous pression amené par le biais de ce système de canaux.

2. Dispositif selon la revendication 1,
**caractérisé en ce que**
l'outil de nettoyage comprend une roue à ailettes (8) disposée de manière à être rotative dans le logement et entraînée par les jets de fluide sous pression.

3. Dispositif selon la revendication 2,
**caractérisé en ce que**
la roue à ailettes (8) est disposée dans le logement en montage flottant.

4. Dispositif selon l'une quelconque des revendications 1 à 3,
**caractérisé en ce que**
l'outil de nettoyage (8) comprend un moyeu (9) ayant un évidement central, dont la forme est adaptée au contour de la queue conique (15) y compris sur sa surface plane (16).

5. Dispositif selon l'une quelconque des revendications 1 à 4,
**caractérisé en ce que**
plusieurs éléments abrasifs (10, 12) agissant sur les surfaces de la queue conique à nettoyer sont prévus sur l'outil de nettoyage (8) en décalage angulaire.

6. Dispositif selon la revendication 5,
**caractérisé en ce que**
les éléments abrasifs (10, 12) sont conçus sous forme d'embauchoir ou de brosse.

7. Dispositif selon l'une quelconque des revendications 1 à 6,
**caractérisé en ce que**
l'outil de nettoyage (8) est constitué de plastique.

8. Dispositif selon l'une quelconque des revendications 1 à 7,
**caractérisé en ce que**
l'outil de nettoyage (8) est disposé dans le logement de manière à être remplaçable.

9. Dispositif selon l'une quelconque des revendications 1 à 8,
**caractérisé en ce que**
le fluide sous pression est le liquide de rinçage propre à la machine.

10. Dispositif selon l'une quelconque des revendications 1 à 9,
**caractérisé en ce que**
le fluide sous pression est l'air sous pression propre à la machine.

11. Dispositif selon l'une quelconque des revendications précédentes,
**caractérisé en ce que**
le fluide sous pression est une émulsion constituée du liquide de rinçage et d'air sous pression.

12. Dispositif selon l'une quelconque des revendications précédentes,
**caractérisé en ce que**
le logement est monté sur un support mobile (20).
